Europäisches Patentamt

European Patent Office

Office européen des brevets

(11) Publication number: **0 341 784**
**A2**

## (12) EUROPEAN PATENT APPLICATION

(21) Application number: **89201153.7**

(22) Date of filing: **05.05.89**

(51) Int. Cl.⁴: **G01N 30/32**

(30) Priority: **13.05.88 GB 8811446**

(43) Date of publication of application:
**15.11.89 Bulletin 89/46**

(84) Designated Contracting States:
**CH DE ES FR GB IT LI NL SE**

(71) Applicant: **PHILIPS ELECTRONIC AND
ASSOCIATED INDUSTRIES LIMITED
Philips House 188 Tottenham Court Road.
London W1P 9LE(GB)**

(84) **GB**

Applicant: **N.V. Philips' Gloeilampenfabrieken
Groenewoudseweg 1
NL-5621 BA Eindhoven(NL)**

(84) **CH DE ES FR IT LI NL SE**

(72) Inventor: **James, Phillip Andrew
c/o Philips Scientifiic York Street
Cambridge CB1 2PX(GB)**

(74) Representative: **Andrews, Arthur Stanley et al
PHILIPS ELECTRONICS Patents and Trade
Marks Department Centre Point New Oxford
Street
London WC1A 1QJ(GB)**

(54) Liquid chromatography.

(57) A liquid chromatograph includes a liquid chromatograph pump comprising a reciprocating piston (26) in a cylinder (202). A first annular seal (207) is provided in the form of an annular U-shaped channel with the open end of the 'U' directed towards the cylinder. A second similar annular seal (209) is provided which is located on the piston outside the first annular seal (207) and oppositely directed. The seals (207, 209) are preferably dimensioned and separated so that the piston stroke is less than the distance between the outer ends of the seals so that the portion of the piston surface wetted by the liquid being pumped does not become exposed to the atmosphere on the suction stroke.

Fig. 5.

# LIQUID CHROMATOGRAPHY

The invention relates to a liquid chromatography pump comprising a reciprocating piston in a cylinder and to a liquid chromatograph including such a pump.

Such liquid chromatography pumps may be single or multiple piston pumps and are used to pump carrier liquids (solvents, buffers, etc.) through a chromatographic column at high pressures, typically up to 400 bar. The pistons, which have to be inert to the various solvents used, are typically of saphire, stainless steel, or titanium and pass thorough annular seals which, for example, may be made from PTFE or polythene. Providing an effective seal for liquid chromatography pumps employing reciprocating pistons which have a long life with the various solvents and buffers used has proved difficult. Liquid clinging to the surface of the pistons passes through the seals and in some circumstances can evaporate and leave a crystaline deposit on the surface of the pistons. When the pump is restarted the crystals may damage the seals and/or cause scoring of the pistons destroying the effectiveness of the seal. One solution to this problem which has been adopted and which is disclosed in EP-A-0095448 is to enclose the piston outside the cylinder and to pass a washing liquid through the enclosure to remove the solvent or buffer residue from the surface of the piston outside the cylinder. However, this increases the size and cost of the pump and the washing is not always totally effective.

It is an object of the invention to enable the provision of a liquid chromatography pump in which the piston seals have a satisfactory life.

The invention provides a liquid chromatography pump comprising a cylinder containing a reciprocating piston having a delivery stroke and a suction stroke, a first annular piston seal, and a second annular piston seal arranged adjacent to the first annular piston seal and located and dimensioned such that the portion of the piston which passes through the first annular seal on the suction stroke of the piston does not extend beyond the second annular seal so that liquid carried through the first annular seal on the surface of the piston is not exposed to the atmosphere.

The provision of a second piston seal in such a position as to prevent the portion of the surface of the piston on which the liquid is deposited from coming into free contact with the atmosphere reduces the evaporation of the liquid and minimises the formation of crystals which might damage the seals. The provision of a second seal is mechanically simple and does not entail a large cost or a larger pump.

The pump may be a multiple piston pump, first and second seals being provided for each piston. Multiple piston pumps enable a more even flow rate to be achieved which is desirable in liquid chromatographs.

The invention further provides a liquid chromatograph comprising a pump, a sample injector, a separating column, and a detector wherein the pump is substantially as set forth herein.

An embodiment of the invention will now be described, by way of example, with reference to the accompanying drawings, in which:-

Figure 1 shows in block schematic form a liquid chromatograph including a liquid chromatograph pump according to the invention;

Figure 2 is a perspective view of an embodiment of a liquid chromatograph pump according to the invention;

Figure 3 is a plan view of the pump shown in Figure 2;

Figure 4 illustrates the delivery of liquid by each piston of a multiple piston pump;

Figure 5 is a cross-sectional view on line X-X of the pump head shown in Figure 3;

Figure 6 is a plan view of the annular seals shown in the pump head of Figure 5, and

Figure 7 is a cross-sectional view on line Y-Y of the seal shown in Figure 6.

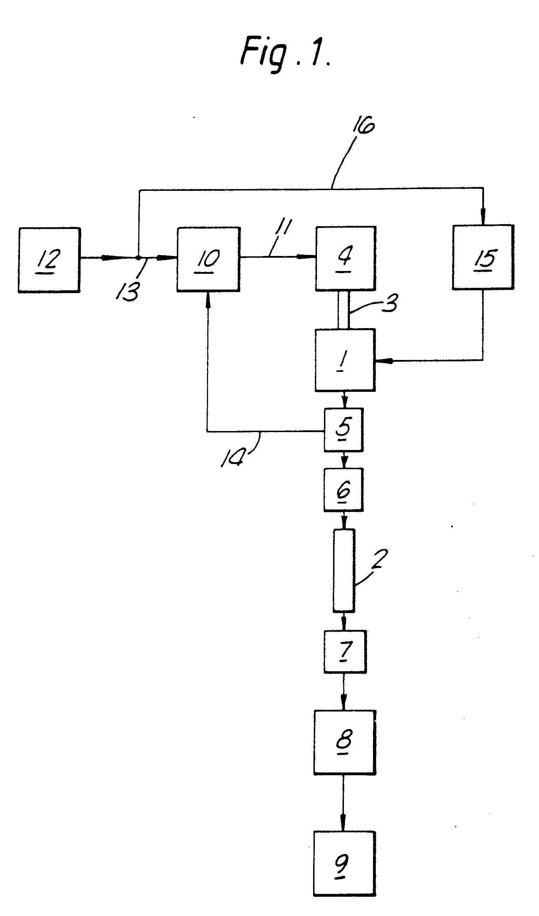

The liquid chromatograph shown in Figure 1 comprises a pump 1 for pumping liquid through a separating column 2. The pump 1 is coupled by a shaft 3 to a stepper motor 4 which drives the pump 1. A pressure transducer 5 is provided to monitor the pressure at the outlet of the pump 1. A sample injector 6 is connected between the outlet of the pump 1 and the inlet to the column 2. The outlet of the column 2 is connected to a detector 7 which produces an electrical output which is fed to signal processing circuitry 8. The output of the signal processing circuitry 8 drives a display device 9 which may take any convenient form, for example a chart recorder or a video display unit. The stepper motor 4 is driven by a stepper motor drive unit 10 which feeds stepping pulses at a desired rate to the motor 4 over a path 11. The stepper motor drive circuit 10 receives a first input from an input unit 12 over a path 13. The input unit 12 may be a keyboard to allow the desired flow rate to be entered by an operator or may be any other arrangement which allows the operating parameters of the chromatograph to be set up. The stepper motor drive circuit also receives a second input over a path 14 from the pressure transducer 5. The inlet of the pump 1 is fed from a solvent mixing arrangement 15 which is controlled by signals from the input unit 12 over a path 16.

In operation a desired flow rate is set up using the input unit 12 which produces signals which enable the stepper motor drive circuit 10 to produce stepping pulses to drive the stepper motor 4 at the appropriate speed to produce the desired flow rate. With a reciprocating pump the flow rate will not remain constant unless measures are taken to make it so. One possibility is to insert a pulse damper between the outlet of the pump and the inlet of the column but this increases the liquid filled volume of the system and slows the change in proportions of solvents. With a single piston pump it is usual to make the suction portion of the pump cycle as small as possible either by design of the cam profile or by increasing the speed of the stepper motor during the suction stroke. The increase in the speed may be in response to the measured outlet pressure of the pump as monitored by the transducer 5.

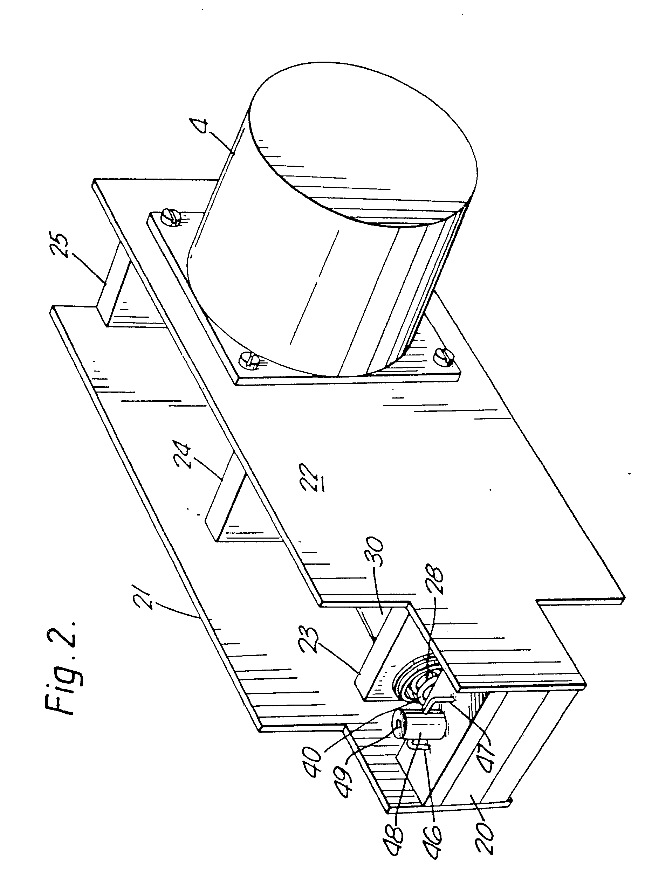

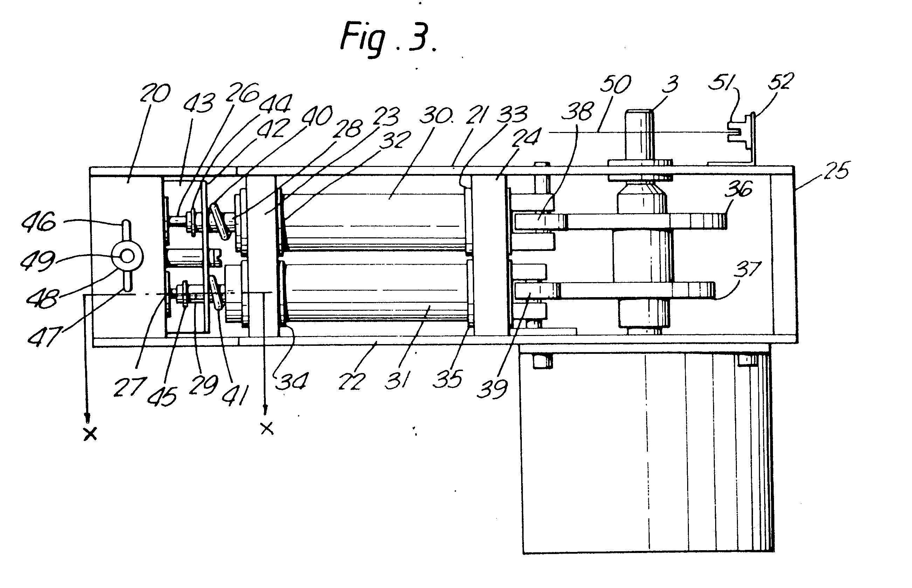

The pump shown in Figures 2 and 3 is similar to that shown in UK Patent Applications Nos. 2180467 (PHB33205) and 2195473 (PHB33295) and may be controlled as described in those patent applications.

As shown in Figures 2 and 3, the pump 1 comprises a pump head 20 which is clamped between two side panels 21 and 22 made from sheet steel. The pump assembly has cross pieces 23, 24 and 25 to provide a rigid structure onto which the motor 4 and various component parts of the pump are mounted. The pump 1 is provided with two pistons 26, 27 mounted in respective rods 28, 29 which pass into the interior of two tubes 30, 31. The tube 30 is slidably mounted in bearings 32, 33 in cross pieces 23 and 24 while the tube 31 is similarly mounted in bearings 34 and 35. Two cams 36 and 37 are mounted on the shaft 3 of the motor 4 and the tubes 30 and 31 are provided with respective cam followers 38 and 39. Coil springs 40 and 41 bias the cam followers 38 and 39 against the cams 36 and 37 by way of projections (not shown) on the rods 28 and 29, the rods 28 and 29 bearing against transverse members in the tubes 30 and 31. A transverse portion 42 of an L shaped bracket 43 provides a bearing surface for the other ends of the springs 40 and 41. Two circlips 44 and 45 are provided on the rods 28 and 29 to retain the pistons 26, 27 in the head 20 when the head is dismantled from the rest of the pump assembly. Two tubes 46, 47 take the outlets from each cylinder of the pump head 20 and combine them in a manifold 48 having an outlet 49 which forms the pump outlet. A shaft encoder 50 is attached to the shaft 3 of the motor 4 and a detector 51, which may be an opto electronic detector, is carried by a bracket 52 attached to the side panel 21 of the pump.

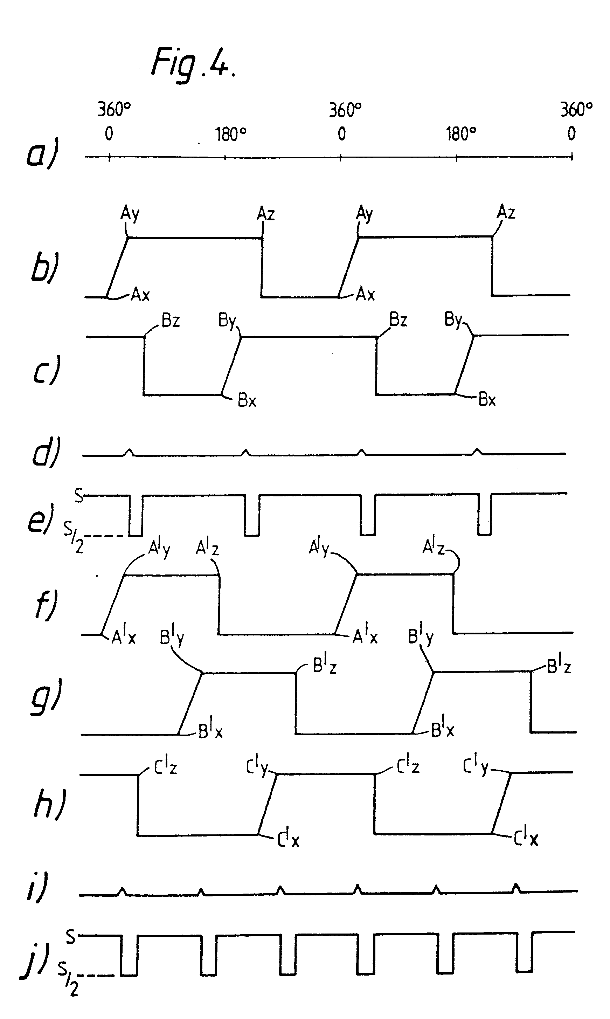

In operation the motor 4 is supplied with stepping pulses by the drive circuit 10 (Figure 1) and causes the shaft 3 to rotate at a desired speed. Consequently the cams 36 and 37 cause the pistons 26 and 27 to advance and retract in accordance with the cam profiles which are designed to cause the pistons to advance on their delivery strokes at a constant linear velocity when the cams have a constant angular velocity. The design of such a cam profile is well known to those skilled in the art. The pistons are arranged to have overlapping delivery strokes, i.e. there is a period of time during each revolution of the motor when both pistons are advancing. Figure 4 illustrates the delivery of liquid by each piston and the motor speed at various points during a pumping cycle. Figure 4a shows the cam angles. Figure 4b shows the delivery cycle of piston 26 and shows that at point Ax the delivery stroke begins, i.e. the piston starts to advance, but that precompression of the liquid is occurring and no actual delivery of liquid takes place until point Ay. From point Ay until point Az delivery of liquid at a constant rate takes place since the piston is advancing at a constant linear velocity, point Az being the point at which the piston reaches top dead centre and thus liquid can no longer be delivered. Figure 4c shows the delivery cycle of piston 27, the points Bx, By and Bz corresponding to the same points on the delivery cycle of piston 27 as points Ax, Ay and Az of piston 26. It can be seen that there is an overlap between the delivery strokes of the two pistons and that consequently unless further action is taken there will be periods during which the flow rate will be doubled. This undesirable occurrence is prevented by halving the motor speed during the overlapping delivery periods as shown in Figure 4e which illustrates the motor speed the lower level S/2 being equivalent to half the speed of the upper level S. The instant when simultaneous delivery by the two pistons commences may be detected by monitoring the pressure at the output of the pump as is shown in Figure 4d. When simultaneous delivery commences the pressure rises and this pressure rise is used to control the motor speed. Thus as soon as a pressure rise is detected the speed of the motor is halved and the pressure returns to the original value since the combined delivery of the two pistons is equal to that of the original single piston delivery. The end of the period during which both pumps are delivering is detected by means of detecting when one of the pistons reaches top dead centre, by use of the shaft encoder, and at that instant the motor speed is doubled to regain its original value.

Figure 4 f) to j) illustrates in a similar way to Figure 4b) to e) the situation where three pistons are provided in the pump and the cam profiles are such that at any one time either one or two of the pistons is/are delivering liquid. The advantage provided by the use of three pistons operating as illustrated in Figure 4 is that a longer period is available for filling each cylinder with the solvent which is to be pumped, i.e. the period $A'z$ to $A'x$ is longer than the period $Az$ to $Ax$. This may be of importance when several liquids are being serially fed into each cylinder to give a desired solvent mix for pumping, particularly at high flow rates when the fill time becomes shorter since the total pump cycle time becomes shorter. Thus it becomes advantageous to make the fill time as large proportion of the pump cycle time. Of course more than three pistons could be used giving even longer fill times but every added piston increases the mechanical complexity and hence cost.

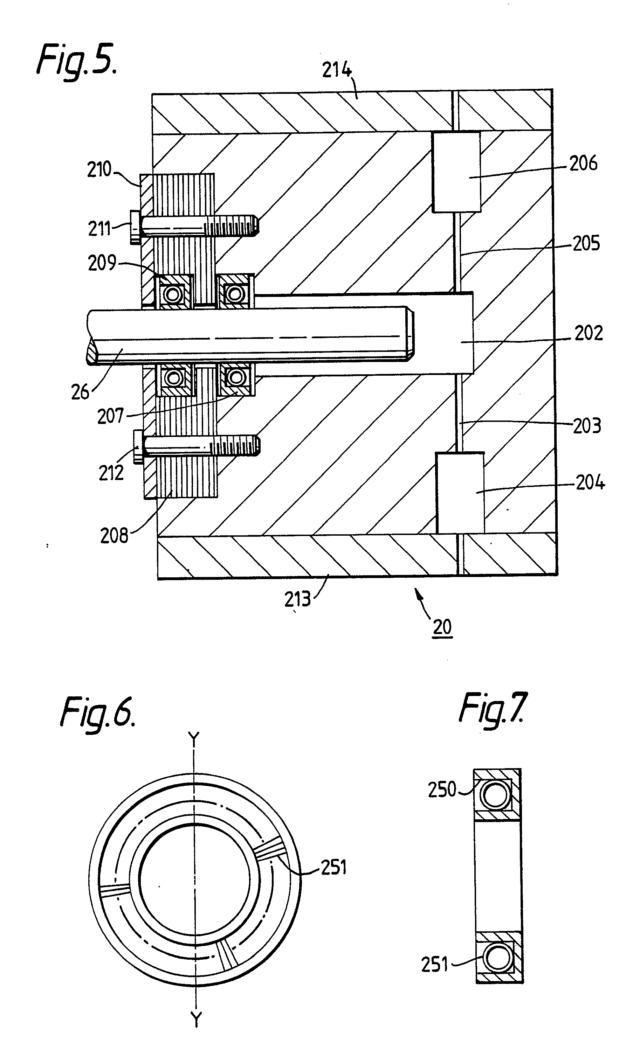

Figure 5 shows a cross-sectional view of the pump head 20 taken on line x-x of Figure 3. The pump head 20 comprises a block 201 in which a cylinder 202 is formed. The cylinder 202 communicates with an inlet tube 203 which leads from an inlet check valve 204 and an outlet tube 205 which leads from an outlet check valve 206. The piston 26 reciprocates in the cylinder 202 and has a first annular seal 207 which may be formed, for example, from PTFE or high density polythene depending on the solvents or buffers with which the pump is intended to be used. A first backing plate 208 is provided to locate the seal 207. A second seal 209 of the same form as the first seal 207 is provided on the piston 26 and located in a recess in the backing plate 208. A second backing plate 210 is provided to retain the second seal 209 on the piston 26. The backing plates 208 and 210 are retained by two bolts 211 and 212 which pass through the backing plates into the block 201. Two further plates 213 and 214 retain the inlet and outlet check valves 204 and 206 in the block 201.

The seal 207 is shown on an enlarged scale in Figures 6 and 7 and is annular in form, the annulus being of the form of a U-shaped channel 250 in which a coil spring 251 is located. The spring 251 biases the arms of the 'U' apart. The seal 207 is located with the open end of the 'U' facing the cylinder so that as the liquid in the cylinder is pressurised it tends to force the arms of the 'U' apart which increases the effectiveness of the seal as the pressure increases. The seal 209 need not be of the same construction as the seal 207 but if, as shown in Figure 5, it is of the same form, it should preferably be arranged back-to-back with the seal 209 otherwise liquid will gather in the U-shaped channel of the second seal and carry-over from one solvent to another will occur.

If the seals 207 and 209 are so dimensioned that the distance between their outer ends is greater than the stroke of the piston, the part of the surface of the piston to which the liquid clings when passing through the seal 207 does not become exposed to the atmosphere beyond the seal 209. In this way evaporation or crystalization of liquid solvents or buffers is substantially reduced leading to s significantly increased effectiveness and life of the seals. Further the life of the pistons may be increased due to the reduced likelihood of scoring by crystals or other contaminants. However, an improved performance may be obtained even if that separation is not provided.

The provision of two seals, preferably separated by such a distance that the wetted surface of the piston is not directly exposed to the atmosphere, can be applied to liquid chromatography reciprocating pumps having any number of pistons and controlled by any method or apparatus. The liquid chromatograph pump described is merely one example of such a pump to which the invention can be applied.

From reading the present disclosure, other modifications will be apparent to persons skilled in the art. Such modifications may involve other features which are already known in the design and use of liquid chromatorgraphs and liquid chromatorgraphy pumps and component parts thereof and which may be used instead of or in addition to features already described herein. Although claims have been formulated in this application to particular combinations of features, it should be understood that the scope of the disclosure of the present application also includes any novel feature or any novel combination of features disclosed herein either explicitly or implicitly or any generalisation of one or more of those features which would be obvious to persons skilled in the art, whether or not it relates to the same invention as presently claimed in any claim and whether or not it mitigates any or all of the same technical problems as does the present invention. The applicants hereby give notice that new claims may be formulated to such features and/or combinations of such features during the prosecution of the present application or of any further application derived therefrom.

## Claims

1. A liquid chromatography pump comprising a cylinder containing a reciprocating piston having a delivery stroke and a suction stroke, a first annular piston seal, and a second annular piston seal arranged adjacent to the first annular piston seal located and dimensioned such that the portion of the piston which passes through the first annular seal on the suction stroke of the piston does not extend beyond the second annular seal so that liquid carried through the first annular seal on the surface of the piston is not exposed to the atmosphere.

2. A liquid chromatography pump as claimed in Claim 1 in which the first and second seals each comprise annular U-shaped channels wherein the first and second seals are arranged with closed sides adjacent each other.

3. A liquid chromatography pump as claimed in any of Claims 1 or Claim 2, in which the pump is a multiple piston pump.

4. A liquid chromatography pump as claimed in Claim 3, in which the pump is a dual piston pump.

5. A liquid chromatograph comprising a pump, a sample injector, a separating column, and a detector, wherein the pump is substantially as claimed in any of Claims 1 to 4.

6. Any novel feature or novel combination of features disclosed herein either implicitly or explicitly.

# Fig .1.

Fig. 2.

EP 0 341 784 A2

# Fig .3.

EP 0 341 784 A2

# Fig.4.

# Fig.5.

214

210

211

209

26

207

212

208

213

206

205

202

203

204

20

# Fig.6.

Y

Y

251

# Fig.7.

250

251